# EUROPEAN PATENT APPLICATION

(11) **EP 4 203 213 A1**
(43) Date of publication of application: **28.06.2023**
(21) Application number: 22208360.2
(22) Date of filing: 18.11.2022
(51) Int. Cl.: H02G 1/00, G01B 5/14, H02G 3/12, H02G 3/14

(54) **AN ALIGNMENT TOOL AND METHOD**

(30) Priority: 23.12.2021 GB 202118883
(71) Applicant: The West Retail Group Limited, Barton-upon-Humber North Lincolnshire DN18 5RL (GB)
(72) Inventor: SMALLEY, Nathan, Barton-upon-Humber, DN18 5RL (GB); WAIN, Oliver, Barton-upon-Humber, DN18 5RL (GB)
(74) Representative: Haseltine Lake Kempner LLP

(57) **Abstract**

An alignment tool 10, 30 for an electrical box 40, 50 having a plurality of screw holes 42a, 42b, the alignment tool comprising: a body portion 14; a plurality of limbs 12a, 12b extending away from the body portion in a first direction, each limb being insertable into a corresponding screw hole of the electrical box; and an alignment member 16 extending away from the body portion in a second direction opposite to the first direction, the alignment member having an alignment target 16a, wherein upon insertion of the limbs into the corresponding screw holes, the alignment target defines a midline of the electrical box.

## Description

### Technical Field

The present disclosure relates to an alignment tool and a method of using an alignment tool, and is particularly, although not exclusively, concerned with a laser alignment tool for an electrical box.

### Background

Kitchens may be manufactured to order such that kitchen components (e.g. cupboards, worktops and splashbacks) are manufactured having dimensions which correspond to those of a particular room and its features. For example, a splashback for a kitchen worktop may be manufactured to order such that a cut-out for an existing electrical socket is provided in the correct location and with the correct dimensions.

It is desirable during kitchen design and manufacture, as well as other design and construction work, that the exact location of features within a particular room are known to a high degree of accuracy and precision.

The determination of the location and/or the dimensions of a feature within a room during the design stage is often referred to as "alignment".

Sockets and switches (e.g., mains electricity sockets, telephone sockets and light switches) commonly comprise a back or pattress box, which is mounted on or in a wall and holds the internal wiring, and a fascia plate having one or more plug sockets and/or switches.

### Statements of Invention

The present inventors have determined that existing methods of alignment for electrical boxes, such as electrical boxes for sockets and switches, may provide unreliable, inaccurate and/or imprecise results. For example, some methods may use a laser to determine the location of a corner, outer edge or internal surface of an electrical box (e.g. a pattress box) within a room. However, such surfaces of an electrical box are ill-suited to position determination, whether by laser or otherwise. The resulting errors may cause materials wastage (e.g., due to incorrectly located, or over-sized, cut-outs).

The present disclosure has been devised with the foregoing in mind.

According to an aspect of the present disclosure there is provided an alignment tool (e.g. a laser alignment tool, a triangulation tool or a surveying tool) for an electrical box (e.g. an electrical box for a switch or socket, such as an electrical switch, an electricity socket, a telephone socket, etc.) having a plurality of recesses (e.g. standardised recesses, fastening recesses, holes and/or screw holes, such as are used for attaching a fascia plate to the electrical box), the alignment tool comprising:
a body portion;
a plurality of limbs extending away from the body portion in a first direction (e.g. below the body portion), each limb being insertable into a corresponding recess (e.g. screw hole) of the electrical box; and
an alignment member extending away from the body portion in a second direction opposite to the first direction (e.g. above the body portion), the alignment member having an alignment target (e.g. a laser alignment target),
wherein upon insertion of the limbs into the corresponding recesses, the alignment target: provides a know point of reference from which measurements can be taken. For example, the alignment target may extend along; define; delineate; be coplanar with; coincide with and/or be contained within, a midline (e.g., a bisecting midplane or line of symmetry) of the electrical box (e.g. the external dimensions of the electrical box).

The electrical box may be a pattress or pattress box, a flush box, a wall box, a switch box, an outlet box, a back box, an electrical socket box and/or any other type of wall-mounted box (e.g. mounted within the wall or mounted upon the wall) which may support an electrical fitting or house wiring, whether electrical or otherwise.

The alignment target may comprise a planar alignment surface. The planar alignment surface may be coplanar with the midline of the electrical box once inserted.

The planar alignment surface may extend along; define; delineate; be coplanar with; coincide with and/or be contained within, a midline between the plurality of limbs. The alignment target may comprise a laser alignment target.

The plurality of limbs may comprise:
a first limb insertable into a first screw hole of the electrical box; and
a second limb insertable into a second screw hole of the electrical box, wherein the first and the second screw holes are provided:
at opposing ends; or
at diagonally opposing corners, of the electrical box. The screw holes may be screw holes for attaching a fascia plate to the electrical box.

The alignment member may be provided asymmetrically/off-midline on the body portion, such that only the planar alignment surface extends along the midline of the tool and/or the electrical box once inserted therein.

The alignment member may comprise a half-round cross section (e.g. a uniform half-round cross section). The alignment member may comprise a semi-cylindrical geometry, of which the longitudinally extending flat surface may comprise the planar alignment surface.

Each limb may comprise a longitudinal axis, the longitudinal axes of the limbs being parallel. Each limb may comprise a cross section tapering towards its distal end (e.g. a circular cross section having a radius which decreases with distance from the body portion).

A longitudinal axis of the alignment member may be parallel with the longitudinal axis of each limb. The alignment surface may be parallel with the longitudinal axis of each limb.

The plurality of limbs may comprise four limbs insertable into four corresponding screw holes, each screw hole being provided in a corner of the electrical box.

Once inserted, the midline between the plurality of limbs may be coplanar with (e.g. contained within, coinciding with, and/or identical to) a midline of the electrical box.

The electrical box may comprise two midlines, extending perpendicularly to one another (e.g. midlines extending lengthways and widthways). The alignment surface may define either of these midlines. The alignment member may comprise two planar alignment targets, extending perpendicularly to one another, each planar alignment target coinciding with one of the perpendicular midlines of the electrical box.

The electrical box may comprise a pattress box.

Upon full insertion of the plurality of limbs, an upper face of the body portion may be flush with (e.g. level with) a perimeter rim of the electrical box.

Upon full insertion of the plurality of limbs, a lower face of the body portion may be flush with (e.g. rest upon or abut) a mouth (or a surface surrounding the mouth) of each of the screw holes into which the legs are insertable.

According to another aspect of the present disclosure, there is provided an alignment tool for an electrical box, the alignment tool comprising:
an engagement formation configured to engage the electrical box; and
an alignment target,
wherein upon engagement of the electrical box by the engagement formation, the alignment target: coincides with; extends along; defines; delineates; is coplanar with; coincides with and/or is contained within, a midline of the electrical box.

The alignment tool may be a laser alignment tool and the alignment target may be a laser alignment target. The engagement formation may comprise a plurality of engagement members (e.g. limbs) configured to engage an internal feature (e.g. recess or screw hole) of the electrical box. For example, the engagement formation may comprise a plurality of engagement members having right-angular cross sections each configured to engage an internal corner of the electrical box.

This aspect may be used as part of, and/or may form part of, the previous aspect.

According to another aspect of the present invention, there is provided a method of aligning an electrical box (e.g. using the alignment tool of any previous aspect), the method comprising:
inserting the limbs of the alignment tool into corresponding recesses (e.g. screw holes for attaching a fascia plate) of the electrical box; or
engaging the electrical box by the engagement formation.

The method may further comprise taking a laser measurement against the alignment target.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of Drawings

For a better understanding of the present invention, and to show more clearly how it may be carried into effect, reference will now be made, by way of example, to the accompanying drawings, in which:
Figure 1A is a perspective view of an alignment tool according to a first embodiment of the present invention having a half-round alignment member;
Figure 1B is a side view of the alignment tool of Fig. 1A;
Figure 2 is a perspective view of an alignment tool according to the first embodiment having a quarter-round alignment member;
Figure 3 is a plan view of an alignment tool according to a second embodiment of the present invention;
Figure 4 is a perspective view of the alignment tool of Figs. 1A, 1B part-inserted into an electrical box;
Figure 5 is a perspective view of the alignment tool of Figs. 1A, 1B fully inserted into an electrical box; and
Figure 6 is a method according to the present invention.

Throughout the drawings, like reference numerals are used to indicate like features in different embodiments.

### Detailed Description

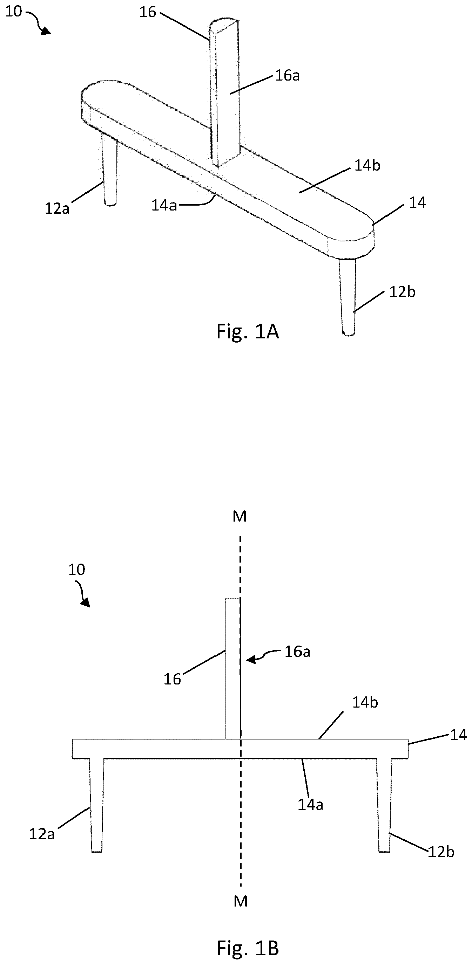

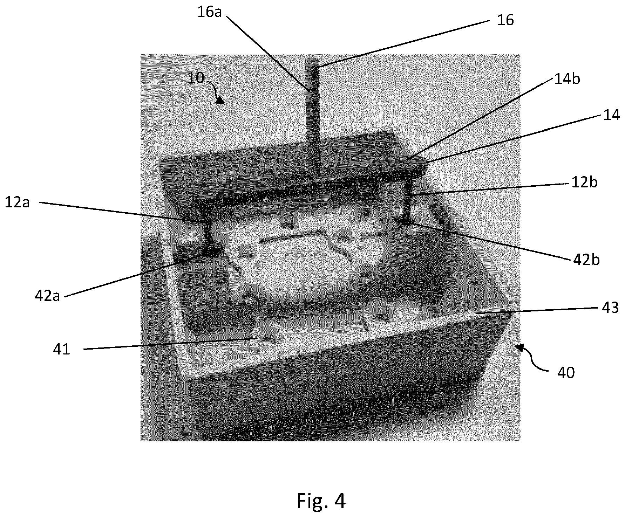

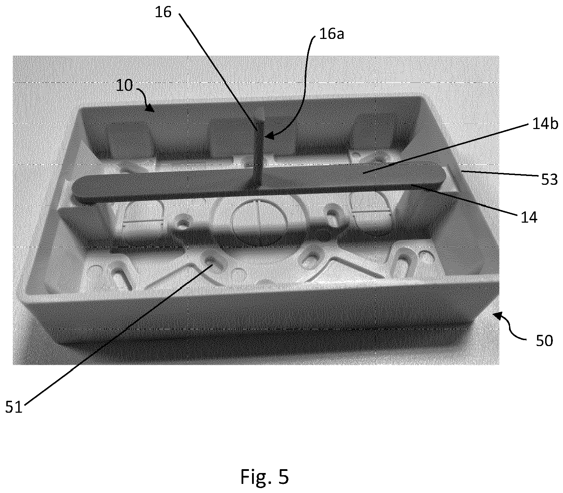

With reference to Figs. 1A and 1B (collectively Fig. 1), an alignment tool 10 for an electrical box 40, 50 (Figs. 4, 5) comprises a first leg 12a, a second leg 12b, a body portion 14 and an alignment member 16.

The body portion 14 is substantially planar and elongate, having a planar first face 14a and a planar second face 14b on opposing sides of the body portion 14. At opposite ends of the first face 14a are provided the first leg 12a and the second leg 12b, extending away from the first face 14a of the body portion 14 along respective longitudinal axes, the longitudinal axes being parallel with one another and perpendicular to the plane of the first face 14a.

Each of the first and second legs 12a, 12b comprise a circular transverse cross section which tapers in radius, such that with distance from the first face 14a of the body portion 14, the cross sectional area of each leg 12a, 12b decreases. The first and second legs 12a,12b each comprise a circular end face.

The first leg 12a and the second leg 12b (e.g. the longitudinal axes thereof) are separated by a predetermined distance corresponding with the separation between corresponding first and second recesses 42a, 42b (Fig. 4) provided in the electrical box 40 (Fig. 4) which the tool 10 is configured to engage. The first and second legs 12a, 12b are configured to engage (e.g. be inserted within) corresponding recesses 42a, 42b provided within the electrical box 40. For example, the longitudinal axes of the first and second legs 12a, 12b may have substantially the same distance separation as those of the recesses 42a, 42b provided within the electrical box 40.

In the illustrated arrangement, the recesses comprise screw holes which receive screws for securing the facia to the box. The standard distance between such screw holes 42a, 42b will vary from country to country, but this distance is generally standardised within each country for each electrical box type. For example, when the electrical box is a UK single electrical plug socket, the distance between the longitudinal axes of the legs is 60.3 mm, whereas when the electrical box is a UK double socket, the separation is 120.6 mm. A user of the present invention may have one alignment tool 10 for each electrical box type.

On the second face 14b of the body portion 14 is provided the alignment member 16. The alignment member 16 extends perpendicularly away from the second face 14b in a second direction which is opposite to that of the first direction. For example, the alignment member 16 may extend above the body portion 14, whilst the legs 12a, 12b extend below. Accordingly, the plurality of legs 12a, 12b and the alignment member 16 extend in directions parallel but opposite to one another.

As shown in Fig. 1, the alignment member 16 has a half-round or D-shaped cross section, so that the alignment member 16 is semi-cylindrical and has a planar face which forms a planar alignment surface 16a. The alignment member 16 is located on the body portion 14 such that the planar alignment surface 16a coincides with and is coplanar with the bisecting midline M-M (Fig. 1A) between the first and second legs 12a,12b. For example, the alignment member 16 is provided such that the planar alignment surface 16a is contained within the plane of symmetry of the body portion 14b and the legs 12a,12b (in the absence of the alignment member 16). When the electrical box 40 is a UK single electrical socket box, the planar alignment surface 16a is provided 30.15 mm from the longitudinal axis of each leg 12a, 12b, whereas when the electrical box 40 is a UK double electrical socket box, the planar alignment member 16a is provided 60.3 mm from the longitudinal axis of each leg 12a,12b. The longitudinal axes of the first and second legs 12a, 12b are parallel with the plane of the planar alignment surface 16a.

The planar alignment surface 16a extends from the proximal end of the alignment member 16, at which it meets the body portion 14, to the distal end of the alignment member 16 having the D-shaped end face.

The planar alignment surface 16a provides a laser target, against which a distance determination to the midline of the electrical box may be made, and thus a positional determination of the electrical box may be made. Accordingly, the alignment tool 10 defines the midline of an electrical box so that its external dimensions and geometry can be accurately determined in relation to the room.

The midline of each electrical box, 40, 50 is defined in terms of the external dimensions thereof. For example, with reference to Fig. 4, the electrical box 40 comprises a square external shape, such that the electrical box 40 comprises two bisecting midlines extending perpendicularly to one another. Similarly, with reference to Fig. 5, the electrical box 50 comprises a rectangular external shape, such that the electrical box 50 comprises two bisecting midlines extending perpendicularly to one another. The location of the midline is not necessarily dictated by the internal structure of the electrical box (e.g. internal fastening recesses 41 which may not be symmetric but do not affect external dimensions of the electrical box 40).

It will be understood by the skilled person that the alignment member 16 may comprise an alternative cross section, provided that a suitable laser target is formed. For example, a rectangular or triangular cross section may be suitable, provided that a planar alignment surface is provided so as to coincide with the mid-plane of the alignment tool 10 and/or the electrical box 40, 50.

Similarly, although the body portion 14 is illustrated with a stadium-shaped geometry, it will be appreciated by the skilled person that alternative geometries (e.g. rectangular geometries) of the body portion 14 will be suitable provided that they are capable of supporting the legs 12a, 12b and the alignment member 16, and engaging the electrical box as described later.

In a preferred embodiment for a UK single electrical plug socket box, the body portion 14 is 70.3 mm in length (the circular ends of the stadium shape having a curvature of 5 mm centred at the longitudinal axis of each leg 12a, 12b), 4 mm in thickness, whilst the legs 12a, 12b are 20 mm in length, have a diameter tapering from 3 mm to 2 mm, and the alignment member 16 is 30 mm in length, and comprises a radius of curvature of 3 mm.

In a preferred embodiment for a UK double electrical plug socket box, the dimensions are identical with the exception that the body portion 14 is 130.6 mm in length.

### Quarter-round alignment member

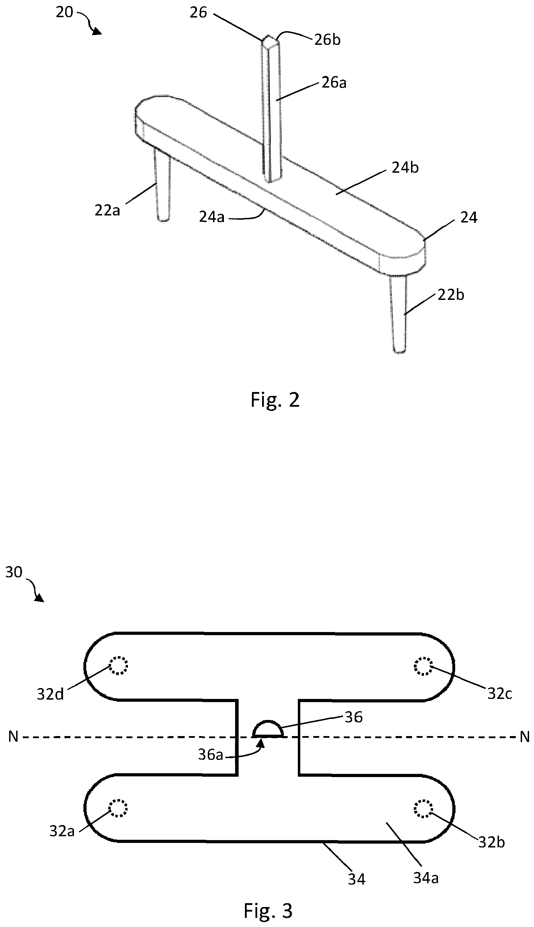

The alignment tool 20 of Fig. 2 is identical to the alignment tool 10 of Fig. 1, with the exception that the alignment member 26 comprises a quarter-round cross section (e.g. a quarter-cylindrical geometry), rather than a half-round cross section. The alignment member 26 thus comprises a first planar alignment surface 26a and a second planar alignment surface 26b provided perpendicularly to one another.

In the same manner as the planar alignment surface 16a of the alignment tool 10, the first planar alignment surface 26a is provided on the body portion 24 such that the first planar alignment surface 26a coincides with and is coplanar with the first midline transversely bisecting the body portion 24 into equal halves, each half including one of the first and second legs 22a, 22b.

The second planar alignment surface 26b is provided on the body portion 24 such that the second planar alignment surface 26b coincides with and is coplanar with a second midline of the alignment tool 20, the second midline longitudinally bisecting the body portion 24. The second midline includes the longitudinal axes of the legs 22a, 22b and is perpendicular to the first midline. The second planar alignment surface 26b thus defines the location of the second midline of the alignment tool 20, and thus the second midline of the electrical socket box into which the alignment tool 20 is inserted.

The alignment tool 20 may thus be used to define the location of a socket box from two different directions (e.g. the centre of the socket box), by defining the two midplanes of the socket box.

### H-shaped embodiment

Fig. 3 is a plan view of an alignment tool 30 according to another embodiment of the present invention. The alignment tool 30 is similar to the alignment tools 10, 20 in that it comprises an alignment member 36 extending above the body portion 34, and a plurality of legs 32 extending below the body portion 34 (as shown by dotted circles 32a-32d). However, the alignment tool 30 differs from the alignment tool 10 of Figs. 1 and 2 in that it comprises four legs 32a, 32b, 32c, 32d provided on an H-shaped body portion 34.

Each leg 32a-32d is provided at a distal end of the H-shaped body portion 34, such that the legs 32a-32d are arranged in a rectangular shape. In the same manner as the legs 12a,12b, the legs 32a-32d are configured to engage respective recesses within the corresponding electrical box, in this embodiment an electrical box having four recesses (e.g. provided in the corners thereof). Similarly, each of the plurality of legs 32 has a circular cross section which tapers with distance from the body portion 34.

The alignment member 36 is provided on the central web of the body portion 34, such that a planar alignment surface 36a coincides with the midplane N-N bisecting the plurality of legs 32a-32d. In the same manner as the alignment tool 10, the alignment member 36 extends above the body portion with a half-round or D-shaped cross section, the flat face of which comprises the planar alignment surface 36a.

The alignment tool 30 may be modified for engaging an electrical box suitable for use in any country. For example it may be adapted for use with a double plug socket electrical box manufactured according to standards in the USA.

It will be understood by the skilled person that each of the alignment tools 10, 30 will also have a midplane which is perpendicular to the illustrated midplanes M-M (Fig. 1B) and N-N (Fig. 3). Accordingly, the alignment members 16, 36 may additionally or alternatively be provided perpendicularly to the illustrated alignment members 16, 36 such that alignment with a different midplane may be determined.

### Engagement

Fig. 4 shows the alignment tool 10 of Fig. 1 part-inserted within an electrical box 40. The electrical box 40 comprises a number of fastening recesses 41 in a lowermost or rearmost surface, the fastening recesses 41 being used to secure or mount the electrical box 40 within, on or to a wall or other structure. The electrical box 40 further comprises a perimeter rim 43, which the fascia plate abuts upon attachment. A user of the alignment tool 10 is likely to use the tool 10, 30 and perform the method 600 (described later) once the electrical box 40 has been secured to a structure using the recesses 41, i.e. after the electrical box 40 is already fixed in place, and when its location is being exactly determined.

The electrical box 40 comprises two screw holes 42a, 42b on opposing sides of the electrical box 40, the screw holes 42a, 42b having a fixed separation according to the standards within the country of use. The screw holes 42a, 42b are used to attach a fascia plate (not shown) to the electrical box 40 (e.g. after the internal wiring has been completed). In the example shown in Fig. 4, the electrical box is a single socket pattress box manufactured according to UK regulations in which the central axes of the screw holes are provided 60.3 mm apart.

In use, the legs 12a, 12b of the alignment tool 10 are inserted into corresponding screw holes 42a, 42b of the electrical box 40, in a direction parallel to the longitudinal axes of the screw holes 42a, 42b.

Fig. 5 shows the alignment tool 10 in a fully inserted position in an electrical box 50. The electrical box 50 is a double socket pattress box manufactured according to UK regulations in which the central axes of the screw holes are provided 120.6 mm apart. It will be understood by the skilled person that the alignment tool 10 shown in Fig. 5 is identical to the alignment tool 10, with the exception that the longitudinal axes of the legs 12a, 12b are provided 120.6 mm apart rather than 60.3 mm apart. Accordingly, the electrical box 50 comprises fastening recesses 51 in a rearmost surface, and a perimeter rim 53.

Upon full insertion, the lower face 14a (obscured in Figs. 4, 5) of the body portion 14 abuts the opening of, and/or the flat surface surrounding, each of the screw holes 42a, 42b. Similarly, upon full insertion, the upper face 14b of the body portion 14 sits flush with the perimeter rim 53 of the electrical box 50. Accordingly, the body portion 14 comprises a thickness dimension which is substantially equal to a height of the perimeter rim 43, 53 above the mouth of the screw holes 42a, 42b and/or the surface surrounding the screw holes. In this way, the upper face 14b of the body portion may be used for alignment of the electrical box 40, 50 in a direction parallel with the alignment member 16.

In the fully inserted position, the planar alignment surface 16a coincides with, defines and/or is coplanar with a midline of the electrical box 50, such that a laser reading or other measurement taken against the planar alignment surface 16a is a measurement to the midline of the electrical box 50.

It will be understood by the skilled person that, given the symmetry of the screw holes 42a, 42b and the off-centre location of the alignment member 16 on the body portion 14, the alignment tool 10 is insertable in either orientation 180 degrees apart (e.g. such that each leg 12a, 12b is insertable into either recess 42a, 42b), and the planar alignment surface 16a will still coincide with the midline of the electrical box 40.

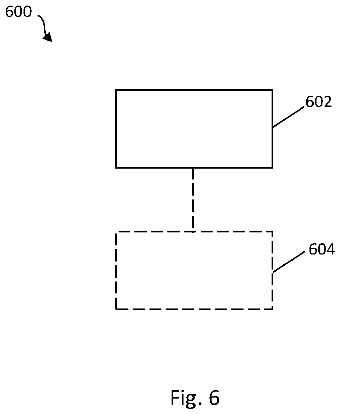

With reference to Fig. 6, a method 600 of aligning an electrical box 40, 50 comprises 602 inserting an alignment tool 10, 30 into the screw holes 42a, 42b of the electrical box. The method 600 may further comprise 604 taking a laser measurement against the planar alignment surface 16a of the alignment tool 10, 30.

In light of the foregoing, the skilled person will readily be able to apply the teaching of the foregoing to any electrical box having a fixed or standardised separation between particular recesses or other features. For example an alternative alignment tool may comprise an engagement formation which, rather than engaging the screw holes 42a, 42b, is configured to engage the perimeter rim 43, 53 or the internal corners of the electrical box 40, 50.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. An alignment tool for an electrical box having a plurality of screw holes, the alignment tool comprising:
a body portion;
a plurality of limbs extending away from the body portion in a first direction, each limb being insertable into a corresponding screw hole of the electrical box; and
an alignment member extending away from the body portion in a second direction opposite to the first direction, the alignment member having an alignment target,
wherein upon insertion of the limbs into the corresponding screw holes, the alignment target defines a midline of the electrical box.

2. The alignment tool of claim 1, wherein the alignment target comprises a planar alignment surface.

3. The alignment tool of claim 2, wherein the planar alignment surface extends along a midline between the plurality of limbs.

4. The alignment tool of any preceding claim, wherein the alignment target comprises a laser alignment target.

5. The alignment tool of any preceding claim, wherein the plurality of limbs comprises:
a first limb insertable into a first screw hole of the electrical box; and
a second limb insertable into a second screw hole of the electrical box, wherein the first and the second screw holes are provided:
at opposing ends; or
at diagonally opposing corners, of the electrical box.

6. The alignment tool of claim 5, when dependent on claim 2, wherein the alignment member is provided asymmetrically or off-midline on the body portion, such that only the planar alignment surface extends along the midline of the alignment tool and/or electrical box.

7. The alignment tool of any of claims 2 or 3 to 6, when dependent on claim 2, wherein the alignment member is semi-cylindrical and has a longitudinally extending flat surface which defines the planar alignment surface.

8. The alignment tool of any preceding claim, wherein each limb comprises a longitudinal axis, the longitudinal axes of the limbs being parallel.

9. The alignment tool of any preceding claim, wherein each limb comprises a cross section tapering towards its distal end.

10. The alignment tool of any of claims 2 or 3 to 9, when dependent on claim 2, wherein the alignment surface is parallel with a longitudinal axis of each limb.

11. The alignment tool of any preceding claim, wherein the plurality of limbs comprises four limbs insertable into four corresponding screw holes, each screw hole being provided in a corner of the electrical box.

12. The alignment tool of any preceding claim, wherein once inserted, the midline of the electrical box is coplanar with the midline between the plurality of limbs, or wherein the midline of the electrical box is perpendicular to the midline between the plurality of limbs.

13. The alignment tool of any preceding claim, wherein the alignment tool comprises two alignment targets perpendicular to one another and coinciding with perpendicular midlines of the electrical box.

14. The alignment tool of any preceding claim, wherein the electrical box comprises a pattress box.

15. The alignment tool of any preceding claim, wherein upon full insertion of the plurality of limbs, an upper face of the body portion is flush with a perimeter rim of the electrical box.
